# EUROPEAN PATENT APPLICATION

(11) **EP 2 746 360 A1**
(43) Date of publication of application: **25.06.2014**
(21) Application number: 13198146.6
(22) Date of filing: 18.12.2013
(51) Int. Cl.: C09K 11/02, C09K 11/59, C09K 11/77

(54) **Method for making rare earth oxide coated phosphor**

(30) Priority: 24.12.2012 IN CH53822012
(71) Applicant: General Electric Company, Schenectady, New York 12345 (US)
(72) Inventor: Nammalwar, Prasanth Kumar, 560066 Bangalore, Karnataka (IN); Srivastava, Alok Mani, Niskayuna, NY 12309 (US); Addepalli, Swarnagowri, 560066 Banagalore, Karnataka (IN); Porob, Digamber Gurudas, 560066 Banagalore, Karnataka (IN); Beers, William Winder, East Cleveland, OH 44112 (US); Cohen, William Erwin, East Cleveland, OH 44112 (US)
(74) Representative: Szary, Anne Catherine

(57) **Abstract**

A method for making coated zinc silicate phosphor is presented. The method includes the steps of combining a zinc silicate with a rare earth compound under aqueous conditions and removing the water from a product of the combination to form a powder. The powder is fired to form a coated zinc silicate phosphor.

## Description

### BACKGROUND

The invention relates generally to a method for making rare earth oxide coated phosphor. More particularly, the invention relates to a method for making improved zinc silicate phosphor coated with rare earth oxide for use in fluorescent lamps.

Fluorescent lamps are low-pressure mercury arc discharge devices which have electrodes at each end of an elongated glass envelope and which contain a phosphor coating on the inner surface of the glass envelope. Such lamps experience a gradual decrease in luminance with increasing hours of use. A variety of factors contribute to the reduction in luminance during lamp operation. These factors include blackening of a lamp, aging of a fluorescent material, and decreasing luminous efficacy of the fluorescent material due to adsorption (reaction) of mercury. The ability of such lamps to resist the decrease in luminance is generally termed lumen maintenance which is measured as the ratio of light output at a given life span compared to an initial light output and expressed as a percentage.

While the decrease in luminance is an occurrence for all fluorescent lamps, it presents a problem for high output lamps, and for phosphors particularly susceptible to degradation in the hostile environment of the discharge. Although all of the factors listed above can be present to a greater or lesser degree in reducing light output, one of the primary causes of the reduction in light output during operation is the formation of mercury compounds, particularly on the surface of the phosphor coating. These mercury compounds are believed to form an ultraviolet radiation absorbing film which prevents the phosphor from being sufficiently excited by the radiation from the mercury discharge to achieve maximum luminance.

Manganese activated zinc silicate phosphor is such a phosphor that is susceptible to mercury. These silicate phosphors are well known fluorescent materials. The phosphor emits in the green region of the visible spectrum when irradiated with ultraviolet radiation of wavelength in the region of 254 nanometers, and is particularly used in fluorescent lamps and cathode ray tubes. An example of such a phosphor is manganese activated zinc orthosilicate, Zn₂SiO₄:Mn. The importance of rare earth free phosphors has increased in recent years because of rare earth elements being increasingly expensive due to demand and supply imbalance.

Most of the prior attempts have focused on applying a layer of alumina, silica, or yttria on the inner wall of lamp or on the phosphor layer as disclosed for example in US2008/0025027. A few attempts were also made for coated phosphor particles with alumina or yttria as disclosed in US Patents 4,925,703, 4,396,863, and 7,341,779. However, these processes may not always be economically suitable, because of their cost-intensive complexity and/or number of processing steps and their time-consuming nature.

It would therefore be desirable to develop new methods for protecting zinc silicate phosphors from degradation.

### BRIEF DESCRIPTION

In one embodiment, a method for making coated zinc silicate phosphor is provided. The method includes steps of combining a zinc silicate with a rare earth compound under aqueous conditions and removing the water from a product of the combination to form a powder. The powder is fired to form a coated zinc silicate phosphor in the further step.

One embodiment provides a method that includes the steps of combining zinc silicate with a yttrium acetate solution to form a mixture, drying the mixture to form a powder, and firing the powder to form a yttria-coated zinc silicate phosphor.

Another embodiment is a method that includes the steps of dispersing yttria in water to form a slurry, combining zinc silicate with the slurry to form a mixture, drying the mixture to form a powder, and firing the powder to form a yttria-coated zinc silicate phosphor.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

As discussed in detail below, some of the embodiments of the present invention provide a method for making improved silicate phosphor that is resistant to the discharge environment inside a fluorescent lamp, for example mercury discharge. These embodiments advantageously provide a rare earth oxide coating for individual particles of the silicate phosphor, for example, a manganese activated/doped zinc silicate, to protect them from mercury. Such coated phosphors can be used in fluorescent lamps or other light sources. Though the present discussion provides examples in the context of manganese doped silicates, these processes can be applied to other phosphors that are susceptible to mercury.

"Zinc silicate phosphor", as used herein, refers to manganese activated/doped zinc silicate throughout the specification. In certain embodiments, the zinc silicate phosphor is manganese activated zinc orthosilicate, Zn₂SiO₄:Mn. The average particle size of zinc silicate phosphor may range from about 2 microns to about 10 microns. As used herein, "coated zinc silicate phosphor" refers to zinc silicate phosphor particles coated with a rare earth compound. In specific embodiments, zinc silicate particles are coated with a rare earth oxide. In one embodiment, substantially all particles of the zinc silicate are coated with the oxide.

The term "rare earth compound", as used herein, refers to a rare earth element-containing salt or compound. In one embodiment, the rare earth compound is a rare earth acetate. In another embodiment, the rare earth compound is a rare earth oxide. Suitable examples of rare earths or rare earth elements include scandium, yttrium, or lanthanum. In certain embodiments, the rare earth compound includes yttrium.

Usually, the rare earth compound is dissolved or dispersed in water. In some embodiments, a rare earth acetate, for example yttrium acetate is dissolved in water. In some other embodiments, a rare earth oxide, for example yttrium oxide (yttria) is dispersed in water to form a slurry. The amount of the rare earth compound in water may range between about 0.001 grams/liter and about 0.10 grams/liter. In some embodiments, the amount of the rare earth compound ranges between about 0.01 grams/liter and 0.1 grams/liter.

According to one embodiment of the invention, a method for making coated phosphor is provided. The method is less complex than prior art methods, and involves fewer processing steps, while producing high quality material. The coated phosphor may be directly usable in fluorescent lamps.

In first step (a), zinc silicate is combined with a rare earth compound under aqueous condition. Suitable amounts of the rare earth compound and zinc silicate phosphor are brought together to form a product of the combination. In one embodiment, a yttrium acetate solution in water is combined with manganese doped zinc silicate to form a solution. In another embodiment, nano particles of yttria (particle size ranges from about 50-70 nm) are dispersed in water to form a slurry, and then the slurry is combined with zinc silicate to form a mixture. In some embodiment, yttria is ultrasonicated with water for a period of time, for example 2 hours to avoid formation of any agglomeration, and then stirred. An amount of rare earth compound sufficient for the purpose may be greater than about 5 weight percent based on an amount of zinc silicate phosphor.

The manganese doped zinc silicate phosphor may be placed in a container, for example in a beaker, and the rare earth compound (a solution or a slurry) may be slowly added with the phosphor. In one embodiment, the phosphor material is completely immersed in the rare earth compound, for example a solution or a slurry. In some embodiments, a sufficient amount of the rare earth compound is added to the phosphor to completely immerse the phosphor. The combination can also be heated, and the remaining solution or slurry may be slowly added. The combination may be stirred at a magnetic stirrer for a period of time. The product of the combination includes a rare earth compound-coated zinc silicate phosphor. In some embodiments, the combination may be wet milled for a duration to enable coating of rare earth compound over zinc silicate particles.

The amount of rare earth compound may be at least about 5 weight percent, relative to the amount of the zinc silicate phosphor. In some embodiments, the amount of the rare earth compound may range from about 10 weight percent to about 50 weight percent. In some embodiments, the amount ranges from about 20 weight percent to about 30 weight percent, relative to the amount of the zinc silicate phosphor.

In some embodiments, a binder may be added to the rare earth compound. The binder may be a polymer which is mixed in the rare earth compound in an amount 0.1 volume % to about 5 volume %. Suitable examples of the binder include polyox, polyvinyl alcohol, polyethylene glycol, and polyacrylates.

The method described herein further includes a drying step (b), which involves removal of water from the product that includes rare earth compound-coated phosphor obtained from step (a). Removal of water may be performed by a suitable mechanical or chemical method for drying the compound-coated phosphor. In some embodiments, the compound-coated phosphor obtained from step (a) can be dried by spray drying. In some embodiments, the compound-coated phosphor can be heated at a temperature higher than about 100 degrees Celsius to evaporate water. The heating temperature may range from about 200 degrees Celsius to about 400 degrees Celsius. The product may further be dried by keeping the compound-coated phosphor in an oven (at a temperature about 400 degrees Celsius) for a few hours. After drying, a rare earth compound-coated zinc silicate powder is obtained.

The rare earth compound-coated zinc silicate powder is then fired in next step (c) at a high temperature. In some embodiments, firing the powder at high temperature decomposes the rare earth compound coated over zinc silicate particles to rare-earth oxide. For example, the yttrium acetate coated over zinc silicate particles is converted to yttrium oxide on firing at a high temperature. In addition, firing at a high temperature provides improved adhesion of the rare earth oxide with zinc silicate particles, and good crystalline oxide coating. Firing is performed at a high temperature under controlled atmosphere. In one embodiment, the compound-coated zinc silicate phosphor powder is heated at a temperature between about 500 degrees Celsius and about 1000 degrees Celsius for about 3 to 5 hours. The heating can be performed in an atmosphere containing hydrogen, nitrogen, or both.

The rare earth oxide coated-zinc silicate phosphor prepared by the methods described can be used in fluorescent lamps.

### EXAMPLES

The example that follows is merely illustrative, and should not be construed to be any sort of limitation on the scope of the claimed invention.

### Example 1

Nano yttria powder (from Inframat) having particle size of about 40-50 nanometers was dispersed in 50 milliliters water to form a slurry. Three samples (sample 1, 2, and 3) with 20 wt%, 30 wt%, and 40 wt% of nano yttria slurry were prepared. These slurries were ultrasonicated for about 2 hours. Each of the slurry was then mixed separately with 5 grams manganese doped zinc orthosilicate powder (average particle size of about 9 microns) by stirring on a magnetic stirrer. Each of the mixture was then wet milled for about 3 hours before drying in an oven at 100 degrees Celsius. The mixtures were then kept in an oven (about 400 degrees Celsius) overnight. These dried mixtures were then fired at about 700 degrees Celsius for about 3 hour in 1 % nitrogen atmosphere. SEM images of these samples showed yttria coated zinc silicate particles.

### Example 2

Yttrium acetate was dissolved in 25 milliliters of water to make two samples (sample 4 and 5) of yttrium acetate solutions of 25 weight % and 30 weight % concentrations. The solutions were heated to completely dissolve yttrium acetate in water. Each of the yttium acetate solutions was slowly added to 5 grams manganese doped zinc orthosilicate powder (having particles of about 5 microns size) kept in a beaker. The zinc silicate was completely immersed in the acetate solution. The mixtures were stirred on a magnetic stirrer for about 2 hours. The mixtures were then heated to evaporate the water, and then kept in oven (at about 400 degrees Celsius) overnight. Both the samples were then fired at about 700 degrees Celsius for 3 hours in 1% hydrogen atm for converting yttrium acetate to yttria. SEM images of the samples showed yttria coated zinc silicate particles.

### Example 3

A sample 6 was prepared as described in example 2 by using 25 wt % concentrated yttrium acetate solution. In this example, about 0.1 % of polyox was also added in the yttrium acetate solution.

The samples of example 1, example 2 and example 3 were characterized for quantum efficiency and absorption at 254 nm by using photoluminescence spectroscopy. Table 1 shows relative quantum efficiency (QE) and absorption (Abs) of the samples and uncoated-manganese doped zinc orthosilicate with respect to quantum efficiency and absorption of standard LAP phosphor. The samples show comparative QE and absorption to uncoated manganese doped zinc orthosilicate phosphor and LAP.

**Table 1**

| Samples | QE | Abs |
|---|---|---|
| Standard LAP | 100 | 93 |
| Uncoated zinc silicate | 104 | 89 |
| Sample 1 | 92 | 86 |
| Sample 2 | 85 | 73 |
| Sample 3 | 81 | 64 |
| Sample 4 | 103 | 84 |
| Sample 5 | 89 | 80 |
| Sample 6 | 104 | 90 |

## Claims

1. A method for making coated zinc silicate phosphor, comprising the steps of:
(a) combining a zinc silicate with a rare earth compound under aqueous conditions;
(b) removing water from a product of the combination to form a powder, and
(c) firing the powder to form a coated zinc silicate phosphor.

2. The method of claim 1, wherein the zinc silicate is manganese doped zinc silicate.

3. The method of claim 1 or claim 2, wherein the zinc silicate has an average particle size ranging from about 2 microns to about 10 microns without coating.

4. The method of any preceding claim, wherein the rare earth compound comprises a rare earth element selected from the group consisting of scandium, yttrium, or lanthanum.

5. The method of claim 1, wherein the rare earth compound is a rare earth acetate or a rare earth oxide.

6. The method of claim 5, wherein the rare earth acetate is dissolved in water or the rare earth oxide is dispersed in water.

7. The method of claim 5 or claim 6, wherein the rare earth compound comprises yttrium acetate and the rare earth oxide comprises yttrium oxide.

8. The method of any preceding claim, wherein the rare earth compound is present in an amount greater than about 5 weight percent, based on an amount of zinc silicate before combining.

9. The method of any preceding claim, wherein the rare earth compound is present in an amount between about 10 weight percent and about 50 weight percent, based on an amount of zinc silicate before combining.

10. The method of any preceding claim, wherein concentration of the rare earth compound ranges between about 0.01 grams/liter and about 0.10 grams/liter.

11. The method of any preceding claim, wherein the step of removing water comprises heating the product or spray drying the product.

12. A method, comprising the steps of:
combining zinc silicate with a yttrium acetate solution to form a mixture;
drying the mixture to form a powder, and
firing the powder to form a yttria-coated zinc silicate phosphor.

13. The method of claim 12, wherein the yttrium acetate solution comprises between about 10 weight percent and about 30 weight percent yttrium acetate, based on an amount of zinc silicate before combining.

14. A method, comprising the steps of:
dispersing yttria in water to form a slurry;
combining the slurry with zinc silicate to form a mixture;
drying the mixture to form a powder, and
firing the powder to yield an yttria-coated zinc silicate phosphor.

15. The method of claim 14, wherein the slurry comprises between about 20 weight percent and about 50 weight percent of yttria, based on an amount of zinc silicate before combining.
